# EUROPÄISCHE PATENTSCHRIFT

(11) **EP 0 638 037 B1**
(45) Veröffentlichungstag und Bekanntmachung des Hinweises auf die Patenterteilung: **28.05.1997**
(21) Anmeldenummer: 93911432.8
(22) Anmeldetag: 28.04.1993
(51) Int. Cl.: B62B 7/10

(54) **ZUSAMMENKLAPPBARES FAHRGESTELL FÜR KINDER- ODER PUPPENWAGEN**
FOLDING FRAME FOR CHILDREN'S OR DOLLS' PRAMS
CHASSIS PLIANT DE POUSSETTES POUR ENFANTS OU POUPEES

(30) Priorität: 28.04.1992 DE 4214537; 18.02.1993 DE 9302601 U
(43) Veröffentlichungstag der Anmeldung: 15.02.1995
(73) Patentinhaber: ZEKIWA KINDERWAGENFABRIK GmbH, D-06712 Zeitz (DE)
(72) Erfinder: KLAUBE, Hans-Joachim, D-4901 Zangenberg (DE); PASCH, Erhard, D-4900 Zeitz (DE)
(74) Vertreter: Röhnicke, Heinz
(86) Internationale Anmeldenummer: DE9300388
(87) Internationale Veröffentlichungsnummer: WO9322178

(56) Entgegenhaltungen:
- FR-A- 549 292
- NL-A- 7 501 957
- US-A- 2 823 043
- US-A- 3 561 787

## Beschreibung

Die Erfindung bezieht sich auf ein zusammenklappbares Fahrgestell für Kinder- oder Puppenwagen gemäß Oberbegriff des Anspruchs 1. Ein derartiges Fahrgestell ist aus der DE-A-2 324 509 bekannt.

Damit Kinderwagen beim Transport, beispielsweise im Kofferraum eines Autos, einen relativ kleinen umbauten Raum einnehmen, ist es allgemein bekannt, das Fahrgestell so auszubilden, daß es zusammengelegt werden kann. Dabei haben sich im Rahmen der Entwicklung zusammenlegbarer Fahrgestelle für Kinderwagen die unterschiedlichsten Lösungen ergeben, denen jedoch immer wieder der Nachteil anhaftet, daß für die scherenartig zu beiden Seiten des die Wanne des Kinderwagens aufnehmenden Tragrahmens angeordneten vorderen und hinteren Streben der Einsatz von Werkstoffen notwendig ist, die eine hohe mechanische Festigkeit besitzen oder eine Verstärkung durch zusätzliche Bauteile notwendig machen. Das resultiert aus der Tatsache, daß die zu beiden Seiten des Tragrahmens angeordneten Streben über einen gemeinsamen Drehpunkt verbunden sind, indem diese für die Unterbringung eines Bolzens durchbohrt sind, so daß ihr Querschnitt geschwächt wird. So geht aus der DE 23 24 509 B2 ein zusammenlegbares Fahrgestell für Kinderwagen hervor, bei dem die vorderen und hinteren Streben zu beiden Seiten des Tragrahmens über einen derartigen Drehpunkt verbunden sind. Dabei stehen die oberen Enden der Streben über je einen Drehpunkt mit dem Tragrahmen sowie mit dem Schiebebügel in Verbindung, der seinerseits über einen weiteren Drehpunkt ebenfalls am Tragrahmen angelenkt ist. Die unteren Enden der vorderen und hinteren Streben sind über Drehpunkte mit Lenkern verbunden, die nun wieder gelenkig mit einem Tragbügel in Verbindung stehen, an dem die Achsen mit den Laufrädern befestigt sind. Wird bei diesem zusammenlegbaren Fahrgestell eine Entriegelung des Schiebebügels vorgenommen, so bewegt sich der Tragrahmen durch Drehung der Streben sowie der Lenker um ihre Drehpunkte nach unten. Die bewegliche Verbindung der Streben mit dem Tragbügel bedeutet, daß bei der Auslegung des Fahrgestells nicht nur die Schwächung des Querschnittes der Streben zu berücksichtigen ist, sondern daß die Lageveränderung der unteren Drehpunkte zusätzlich bei der Auslegung des gesamten Fahrgestells zu berücksichtigen ist.

Durch die DE 16 05 870 ist ein zusammenklappbares Fahrgestell für Kinder- oder Puppenwagen bekannt, bei dem auf dem Schenkel des Unterteiles des Schiebers eine Hülse verschiebbar gelagert ist. Dabei sind an der Hülse mehrere Drehpunkte angeordnet. So ist an ihrem dem Grundrahmen zugerichteten Ende die Hülse mit einem Drehpunkt für eine mit dem Grundrahmen in Verbindung stehende Strebe versehen. Eine zweite Strebe ist in der Mitte der Hülse über einen weiteren Drehpunkt angelenkt, wobei diese Strebe in der Mitte des Tragrahmens angreift. Über einen weiteren Drehpunkt steht die Hülse ebenfalls über eine Strebe mit dem oberen Teil des Schiebers in Wirkverbindung. Das aber bedeutet, daß der Tragrahmen im wesentlichen freitragend ist und deshalb zu seiner Abstützung materialaufwendige Bauteile für das Fahrgestell erfordert.

Der Erfindung liegt die Aufgabe zugrunde, ein zusammenklappbares Fahrgestell für Kinder- oder Puppenwagen der im Oberbegriff des Anspruchs 1 genannten Gattung so auszubilden, daß es ein geringes Gewicht sowie ein kleines Verstauvolumen bei einfacher Handhabbarkeit aufweist.

Erfindungsgemäß wird diese Aufgabe bei dem gattungsgemäßen Fahrgestell dadurch gelöst, daß die vorderen und hinteren Streben an den Verbindungsstreben im unteren Bereich seitlich an nicht verschiebbaren Drehpunkten angelenkt sind und in dem mittleren Bereich jeweils in dem Kreuzungspunkt der vorderen Strebe und der hinteren Strebe ein Verbindungsglied angeordnet ist, welches eine Buchse aufweist, die entlang einer der beiden Streben verschiebbar angeordnet ist, wobei die Buchse mit einem Drehpunkt im mittleren Bereich der anderen Strebe verbunden ist.

Vorteilhaft ist es dabei, wenn an der Buchse des Verbindungsgliedes eine Lasche fest angeordnet ist, welche einen Bolzen aufnimmt, der drehbar in einer Bohrung in der die Buchse nicht tragenden Strebe angeordnet ist, wobei die Bohrung den Drehpunkt bildet.

Zur Erreichung optimaler Festigkeitswerte an dem Fahrgestell sind dabei vorzugsweise die Buchse auf der hinteren Strebe und der mittlere Drehpunkt in der vorderen Strebe angeordnet.

Eine besonders hohe Festigkeit während des Gebrauches kann dadurch erreicht werden, daß die sich scherenartig in ihrem mittleren Bereich kreuzende vordere Strebe und hintere Strebe in der Gebrauchsstellung zwei mit ihren Spitzen aufeinanderstehende, geschlossene Dreiecke bilden, wobei die Streben jeweils die Schenkel bilden und die Grundseite einmal durch die zugehörige Tragestrebe und zum anderen durch die entsprechende untere Verbindungsstrebe gebildet ist.

Die Festigkeit kann erhöht werden, wenn die Verbindungsstreben einen starren, in Fahrtrichtung geschlossenen U-förmigen Rahmen bilden, bei dem die Verbindungsstreben als nach hinten weisende Schenkel ausgebildet sind, wobei der geschlossene Abschnitt vor den nicht verschiebbaren Drehpunkten, an denen die vorderen Streben an den Verbindungsstreben angelenkt sind, liegt, während die hinteren Streben im Bereich der hinteren Enden der die Schenkel bildenden Verbindungsstreben angelenkt sind.

Um gute Fahreigenschaften zu erreichen und das Stauvolumen zu verringern, ist es zweckmäßig, wenn die unteren Enden der Streben über die im unteren starren Rahmen befindlichen Drehpunkte hinausragen und als Verlängerungen ausgebildet sind, an denen die Laufräder angeordnet sind.

Eine bevorzugte Ausführungsform des erfindungsgemäßen Fahrgestells besteht darin, daß die beiden hinteren Streben an ihren unteren Enden durch eine Querstrebe miteinander verbunden sind, wobei sie mit dieser einen hinteren, geschlossenen U-förmigen Rahmen bilden, der im hinteren Bereich der Verbindungsstreben in den einander gegenüberliegenden, nicht verschiebbaren Drehpunkten angelenkt ist, wobei die Verbindungsstreben nach hinten über die Drehpunkte hinausragende, nach unten gebogene Verlängerungen aufweisen, an denen die hinteren Laufräder angeordnet sind, während die vorderen Laufräder an nach unten über den Drehpunkt hinausragenden unteren Verlängerungen der vorderen Streben angeordnet sind. Durch diese Ausbildung wird ein Fahrgestell geschaffen, das besonders verwindungssteif ist.

Dabei ist es zweckmäßig, wenn die beiden hinteren Streben in dem Bereich, in dem sie den starren U-förmigen Rahmen bilden, nach hinten so abgebogen sind, daß sie annähernd parallel zu den Verbindungsstreben verlaufen.

Vorteilhaft ist es, wenn der mit den hinteren Streben gebildete U-förmige Rahmen oberhalb des mit den Verbindungsstreben gebildeten U-förmigen Rahmens angeordnet ist, wobei die beiden Rahmen auf ihren beiden Seiten durch jeweils eine Lasche miteinander verbunden sind und dabei die Laschen fest an den Verbindungsstreben angeordnet sind und die hinteren Streben oberhalb der Verbindungsstreben in den im oberen Bereich der Laschen angeordneten, nicht verschiebbaren Drehpunkten angelenkt sind. Hierdurch ist es möglich, daß die U-förmigen Rahmen die gleiche Breite aufweisen.

Es ist aber auch möglich, daß die U-förmigen Rahmen eine unterschiedliche Breite aufweisen, wobei sie nebeneinander in einer Ebene angeordnet und durch einen, den nicht verschiebbaren Drehpunkt bildenden Bolzen auf beiden Seiten miteinander verbunden sind.

Zur Verbesserung der Fahreigenschaften können zwischen den über die Drehpunkte hinausragenden Verlängerungen und dem jeweiligen Laufrad ein das Laufrad tragender Federkörper angeordnet sein.

Vorzugsweise ist der Federkörper als eine Teleskopfederung ausgebildet.

Die Erfindung soll nachstehend an einem Ausführungsbeispiel näher erläutert werden. In den zugehörigen Zeichnungen zeigen:
- Fig. 1: eine Seitenansicht eines Fahrgestells in Gebrauchsstellung,
- Fig. 2: eine Seitenansicht des teilweise geklappten Fahrgestells nach Fig. 1,
- Fig. 3: die Einzelheit A nach Fig. 1,
- Fig. 4: die Einzelheit B nach Fig. 1,
- Fig. 5: eine perspektivische Ansicht eines Fahrgestells in einer weiteren erfindungsgemäßen Ausbildung in Gebrauchsstellung,
- Fig. 6: die Vorderansicht der Verbindung einer hinteren Strebe mit einer Verbindungsstrebe nach Fig. 5 in vergrößerter Darstellung,
- Fig. 7: die Draufsicht einer gegenüber Fig. 5 und 6 abgewandelten Verbindung einer hinteren Strebe mit einer Verbindungsstrebe.

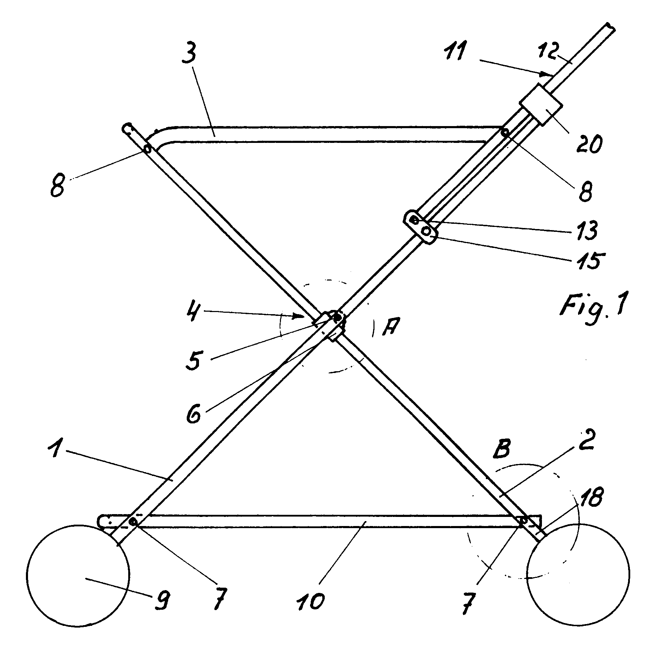

Wie die Fig. 1 zeigt, weist das zusammenlegbare Fahrgestell für Kinderwagen zwei vordere Streben 1 sowie zwei hintere Streben 2 auf. Die hinteren Streben 2 sind mit ihren oberen Enden über jeweils einen oberen Drehpunkt 8 drehbar mit einer Tragestrebe 3 verbunden. Die Tragestreben 3 dienen beispielsweise zur Aufnahme einer nicht dargestellten Wanne eines Kinderwagens. Es ist natürlich auch möglich, an diesen einen Sportwagensitz für Kinder zu befestigen. Der Sportwagensitz kann auch direkt an den Drehpunkten 8 angeordnet sein. Die Tragestreben 3 können zu einem Tragerahmen miteinander verbunden sein. Es ist jedoch auch möglich, die vorderen Streben 1 durch eine Querstrebe miteinander zu verbinden. Im Bereich des oberen Endes jeder der vorderen Streben 1 ist ein Schieber 11 angeordnet. Dieser weist ein oberes, langgestrecktes Teil 12 auf, welches in nicht dargestellter Weise zum Handgriff der Lenkstange führt. Der Schieber 11 ist mit seinem unteren Ende an einem Gelenkpunkt 13 schwenkbar angeordnet. Dieser Gelenkpunkt 13 befindet sich an einer fest mit der vorderen Strebe 1 verbundenen Lasche 15. Auf dem oberen Ende der vorderen Strebe 1 sitzt eine in Längsrichtung verschiebbare Hülse 20, über die sie mit dem oberen Teil 12 des Schiebers 11 verbunden ist. Zwischen der Hülse 20 und dem Gelenkpunkt 13 ist der Schieber 11 drehbar an einem oberen Drehpunkt 8 der Tragestreben 3 angeordnet. Dabei verläuft die Stange des Schiebers 11 annähernd parallel zu der vorderen Strebe 1. An ihrem unteren Ende sind die Streben 1; 2 über einen unteren Drehpunkt 7 mit Verbindungsstreben 10 drehbar verbunden. Es ist möglich, daß die Verbindungsstreben 10 einen geschlossenen oder auch einen U-förmigen Rahmen bilden. Dieser untere Rahmen kann beispielsweise zur Aufnahme eines Gepäckkorbes oder anderer Tragelemente dienen.

Die Streben 1; 2 sind in üblicher Weise zu beiden Seiten der Tragestreben 3 und der Verbindungsstreben 10 angeordnet. Sie kreuzen sich scherenartig im mittleren Teil des Fahrgestells und bilden auf diese Weise zwei mit ihren Spitzen aufeinanderstehende Dreiecke. Diese Dreiecke sind geschlossen und in der in Fig. 1 dargestellten Gebrauchsstellung gleichschenklig, wobei die vordere Strebe 1 und die hintere Strebe 2 jeweils die gleichen Schenkel bilden. Die Grundseite bildet dabei die zugehörige Tragestrebe 3 bei dem oberen Dreieck und die untere Verbindungsstrebe 10 bei dem unteren Dreieck. Bei dieser Betrachtung werden bei dem oberen Dreieck die vordere Strebe 1 und der Schieber 11 als ein Teil angesehen, wobei das geschlossene Dreieck an dem oberen Drehpunkt 8, der den Schieber 11 mit der Tragestrebe 3 verbindet, endet.

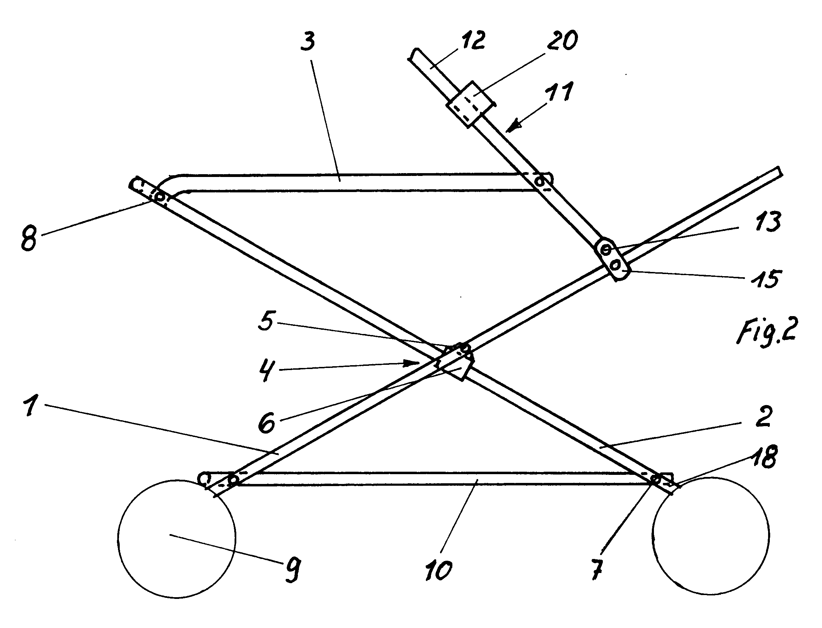

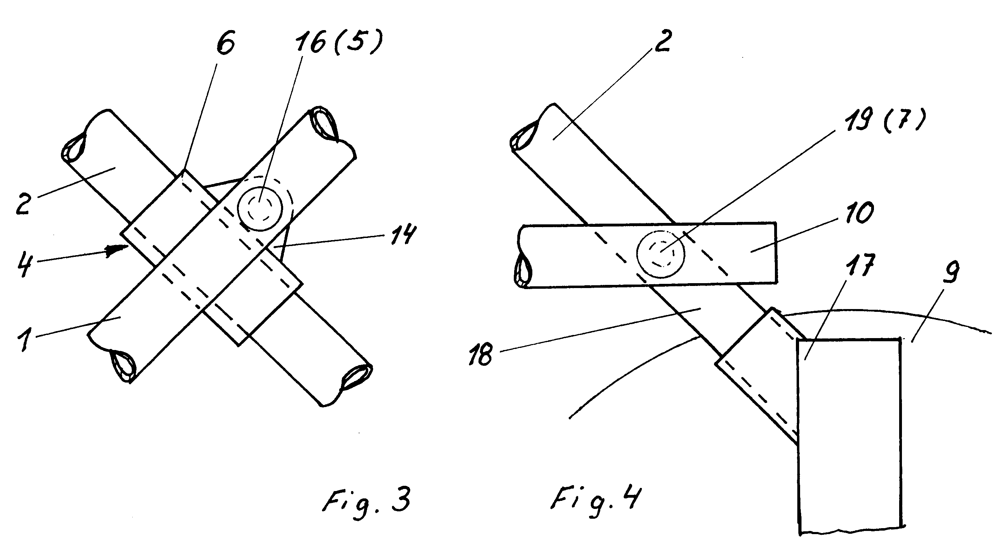

Im Kreuzungspunkt der beiden Dreiecke ist ein Verbindungsglied 4 angeordnet, welches in der Fig. 3 näher dargestellt ist. Das Verbindungsglied 4 weist eine Buchse 6 auf, welche auf einer der beiden Streben 1; 2 in Längsrichtung verschiebbar angeordnet ist. Mit der Buchse 6 ist eine mit einer Bohrung versehene Lasche 14 (Fig. 3) fest verbunden. In der Bohrung der Lasche 14 ist ein Bolzen 16 drehbar angeordnet. Dieser Bolzen 16 sitzt drehbar in einer Bohrung der anderen Strebe 1; 2. Die Bohrung bildet einen mittleren Drehpunkt 5. Die Bewegung des Fahrgestells beim Zusammenklappen bzw. in entsprechender Weise beim Aufklappen wird anhand der Fig. 2 später erläutert.

Es ist vorteilhaft, wenn die Buchse 6 des Verbindungsgliedes 4 auf der hinteren Strebe 2 und die den mittleren Drehpunkt 5 bildende Bohrung in der vorderen Strebe 1 angeordnet sind.

Eine Bohrung in einem tragenden Teil schwächt immer dessen Festigkeit. Da die vordere Strebe 1 eines Fahrgestells geringere Kräfte aufzunehmen hat als die hintere Strebe 2 desselben, wird in dem Ausführungsbeispiel diese Ausbildung gewählt. Es ist natürlich auch eine umgekehrte Ausbildung möglich.

In ihrem unteren Bereich weisen die Streben 1; 2 über die unteren Drehpunkte 7 hinausragende Verlängerungen 18 auf. Eine nähere Darstellung ist in Fig. 4 gezeigt. Bei dieser Darstellung ist die hintere Strebe 2 dargestellt, die in dem unteren Drehpunkt 7 über einen Bolzen 19 drehbar mit der Verbindungsstrebe 10 verbunden ist. Die Verlängerung 18 der Strebe 2 ragt über diesen Drehpunkt 7 hinaus. An ihrem unteren Ende ist ein Laufrad 9 befestigt. Dieses ist vorzugsweise in an sich bekannter Weise an einem Federkörper 17 angeordnet. Hierbei ist besonders vorteilhaft eine Teleskopfeder einsetzbar.

In Fig. 2 ist das Fahrgestell in teilweise geklappter Stellung dargestellt. Um das Fahrgestell zusammenklappen zu können, wird die Hülse 20 des Schiebers 11 auf seinem oberen Teil nach oben verschoben und dadurch dieser von der vorderen Strebe 1 gelöst. Der Schieber 11 wird dann in Richtung der Tragestreben 3 um den Gelenkpunkt 13 geklappt. Dadurch bewegen sich die Streben 1; 2 nach unten. Sie schwenken im Verbindungsglied 4. Dabei dreht sich gemäß dem Ausführungsbeispiel die vordere Strebe 1 um den im mittleren Drehpunkt 5 angeordneten Bolzen 16. Durch die Verbindung über die Lasche 14 mit der Buchse 6 verschiebt sich gleichzeitig die hintere Strebe 2 in dieser in Längsrichtung. Beim Zusammenklappen wandert dabei das Verbindungsglied 4 in Richtung der Seite der Lenkstange.

Das Fahrgestell kann flach zusammengelegt werden. In gleicher Weise verschiebt sich das Verbindungsglied 4 beim Aufklappen des Fahrgestells nach oben, bis es seine Mittelstellung einnimmt.

Durch diese Anordnung des Verbindungsgliedes mit der Buchse wird erreicht, daß die Streben 1; 2 sich um die unteren Drehpunkte 7 ohne eine seitliche Verschiebung derselben drehen. In dem oberen Bereich des Fahrgestells erfolgt eine entsprechende Drehbewegung unter Einbeziehung der Drehbewegung des Schiebers 11. Durch den Einsatz des erfindungsgemäßen Verbindungsgliedes mit der Buchse wird das Auftreten von mechanischen Spannungen im Fahrgestell vermieden. Wird weiterhin berücksichtigt, daß die beim Gebrauch des Kinderwagens am stärksten belasteten hinteren Streben 2 im Kreuzungsbereich mit den vorderen Streben 1 keine Querschnittsschwächung mehr aufweisen und daß ein Tragrahmen mit den Tragstreben 3, auch nicht teilweise, nicht mehr freitragend ist, so können nunmehr für das Fahrgestell Werkstoffe eingesetzt werden, die nicht nur ein geringes Gewicht, sondern auch eine geringe Festigkeit besitzen. Es liegt gleichzeitig eine stabile Konstruktion unter besonderer Berücksichtigung der erreichten Dreieckskonstruktionen mit festen Drehpunkten im oberen und unteren Bereich des Fahrgestells vor. Der Aufbau des Fahrgestells ermöglicht gleichzeitig eine kostengünstige Fertigung desselben.

Es ist in gleicher Weise möglich, die erfindungsgemäße Lösung für ein Fahrgestell für einen Puppenwagen zu verwenden. Ein geeigneter Einsatz für andere Transportmittel liegt ebenfalls im Rahmen der Erfindung.

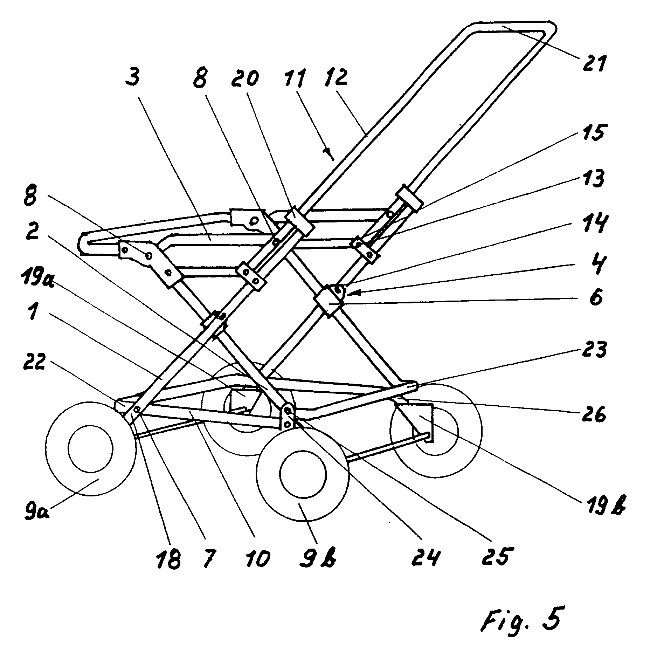

Eine weitere erfindungsgemäße Ausbildung des zusammenklappbaren Fahrgestells ist in Fig. 5 bis 7 gezeigt. Dabei weist dieses ebenfalls zwei vordere Streben 1 sowie zwei hintere Streben 2 auf. Die hinteren Streben sind mit ihren oberen Enden über jeweils einen oberen Drehpunkt 8 drehbar mit einer Tragestrebe 3 verbunden. Die Tragestreben 3 dienen beispielsweise zur Aufnahme einer nicht dargestellten Wanne eines Kinderwagens. Es ist natürlich auch möglich, an diesen einen Sportwagensitz für Kinder zu befestigen. Der Sportwagensitz kann auch direkt an den Drehpunkten 8 angeordnet sein. Die Tragestreben 3 können zu einem Tragrahmen miteinander verbunden sein. Im Bereich des oberen Endes jeder der vorderen Streben 1 ist ein Schieber 11 angeordnet. Dieser weist ein oberes Teil 12 auf, an welches sich der Handgriff 21 der Lenkstange anschließt. Der Schieber 11 ist mit seinem unteren Ende an einem Gelenkpunkt 13 schwenkbar angeordnet. Dieser Gelenkpunkt 13 befindet sich an einer fest mit der vorderen Strebe 1 verbundenen Lasche 15. Auf dem oberen Ende der vorderen Strebe 1 sitzt eine in Längsrichtung verschiebbare Hülse 20, über die sie mit dem oberen Teil 12 des Schiebers 11 verbunden ist. Zwischen der Hülse 20 und dem Gelenkpunkt 13 ist der Schieber 11 drehbar an einem oberen Drehpunkt 8 der Tragestreben 3 angeordnet. Dabei verläuft die Stange des Schiebers 11 annähernd parallel zu der vorderen Strebe 1. Diese Ausbildung entspricht im wesentlichen der des vorstehend beschriebenen Fahrgestells. An ihrem unteren Ende sind die vorderen Streben 1 über einen unteren Drehpunkt 7 mit einem U-förmigen Rahmen 22 verbunden, wobei das U in Fahrtrichtung geschlossen ist. Die beiden nach hinten weisenden Schenkel des U-förmigen Rahmens sind als Verbindungsstreben 10 ausgebildet.

Die beiden hinteren Streben 2 sind an ihrem unteren Ende durch eine Querstrebe miteinander verbunden und bilden dadurch im hinteren unteren Bereich des Kinderwagens einen starren U-förmigen Rahmen 23. Dieser ist auf der der Fahrtrichtung gegenüberliegenden Seite geschlossen. Wie besonders auch in Fig. 6 dargestellt, sind die beiden hinteren Streben 2 in dem Bereich, in dem sie den starren U-förmigen Rahmen 23 bilden, nach hinten abgebogen und verlaufen dadurch annähernd parallel zu den Verbindungsstreben 10. In diesem Bereich sind die hinteren Streben 2 mit den Verbindungsstreben 10 und damit mit dem starren U-förmigen Rahmen 22 durch jeweils eine Lasche 24 verbunden. Diese ist an dem Rahmen 22 beispielsweise durch eine Nietverbindung fest angeordnet. Dagegen sind die hinteren Streben 2 an den Laschen 24 in einem nicht verschiebbaren Drehpunkt 25 oberhalb des U-förmigen Rahmens 22 angelenkt. Dadurch können beide U-förmige Rahmen 22; 23 eine gleiche Breite aufweisen und bilden in Gebrauchsstellung des Kinderwagens praktisch einen gemeinsamen rechteckigen unteren Rahmen.

Die nach hinten offenen Enden der Verbindungsstreben 10 sind hinter dem Befestigungspunkt der Laschen 24 winklig nach unten abgebogen und bilden Verlängerungen 26. Diese nehmen die hinteren Laufräder 9b des Kinderwagens auf. Dabei können in bevorzugter Weise Federkörper 17b, wie eine Teleskopfederung, angeordnet sein. Diese tragen dann die Achse mit den hinteren Laufrädern 9b.

Dagegen sind die vorderen Streben 1 über den unteren Drehpunkt 7 am U-förmigen Rahmen 22 hinaus verlängert. An den unteren Enden der Verlängerung 18 nehmen sie die vorderen Laufräder 9a auf, wobei ebenfalls vorzugsweise ein Federkörper 19a in Form einer Teleskopfeder zwischengeschaltet ist.

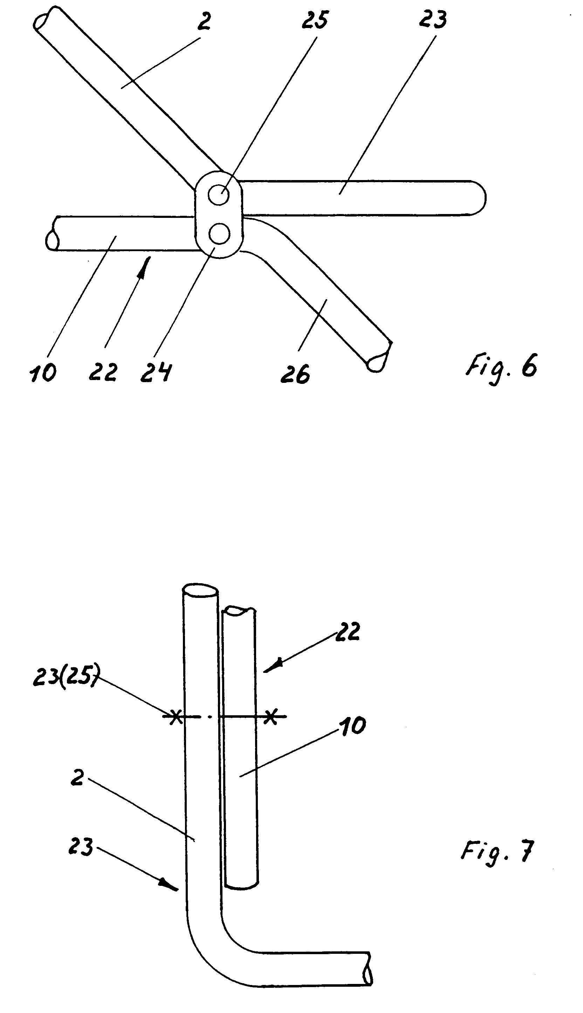

Eine weitere Ausführungsform ist in Fig. 7 dargestellt. Der durch die hinteren Streben 2 sowie deren Querstrebe gebildete U-förmige Rahmen 23 kann eine größere oder eine geringere Breite als der U-förmige Rahmen 22 mit seinen Verbindungsstreben 10 aufweisen. In Fig. 7 weist der Rahmen 23 eine größere Breite auf. Dadurch ist es möglich, daß beide Rahmen 22; 23 in einer Ebene liegen. Die Verbindung kann dann über einen, den nicht verschiebbaren Drehpunkt 25 bildenden Bolzen erfolgen.

Durch die erfindungsgemäße Ausbildung wird eine hohe Verwindungssteifigkeit des Fahrgestells erreicht, wobei selbst nach längeren Gebrauch des Kinderwagens die Stabilität des Fahrgestells nicht beeinträchtigt wird.

## Patentansprüche

1. Zusammenklappbares Fahrgestell für Kinder- oder Puppenwagen, welches zwei vordere und zwei hintere, paarweise miteinander scherenartig gekreuzte Streben (1; 2) aufweist, die mit Tragestreben (3) verbunden sind, wobei die oberen Enden der hinteren Streben (2) mit den Tragestreben (3) über Drehpunkte (8) verbunden sind, während in dem oberen Bereich der vorderen Streben (1) ein zum Schieben des Kinder- oder Puppenwagens vorgesehener Schieber (11) angeordnet ist, der über einen Drehpunkt an den vorderen Streben (1) angelenkt ist, während die Tragestreben (3) mit dem Schieber (11) über einen Drehpunkt verbunden sind, wobei in der Gebrauchsstellung der Schieber (11) und die vorderen Streben (1) fest miteinander verbunden sind und dabei der Schieber (11) parallel zu den vorderen Streben (1) verläuft und sich in deren Verlängerung erstreckt, wobei im unteren Bereich die vorderen und hinteren Streben (1; 2) an Verbindungsstreben (10) angelenkt sind sowie in ihrem Kreuzungspunkt in ihrem mittleren Bereich schwenkbar miteinander verbunden sind, dadurch gekennzeichnet, daß die vorderen und hinteren Streben (1; 2) an den Verbindungsstreben (10) im unteren Bereich seitlich an nicht verschiebbaren Drehpunkten (7; 25) angelenkt sind und in dem mittleren Bereich jeweils in dem Kreuzungspunkt der vorderen Strebe (1) und der hinteren Strebe (2) ein Verbindungsglied (4) angeordnet ist, welches eine Buchse (6) aufweist, die entlang einer der beiden Streben (1; 2) verschiebbar angeordnet ist, wobei die Buchse (6) mit einem Drehpunkt (5) im mittleren Bereich der anderen Strebe (1; 2) verbunden ist.

2. Zusammenklappbares Fahrgestell nach Anspruch 1, dadurch gekennzeichnet, daß an der Buchse (6) des Verbindungsgliedes (4) eine Lasche (14) fest angeordnet ist, welche einen Bolzen (16) aufnimmt, der drehbar in einer Bohrung in der die Buchse (6) nicht tragenden Strebe (1; 2) angeordnet ist, wobei die Bohrung den Drehpunkt (5) bildet.

3. Zusammenklappbares Fahrgestell nach Anspruch 1 und 2, dadurch gekennzeichnet, daß die Buchse (6) auf der hinteren Strebe (2) und der mittlere Drehpunkt (5) in der vorderen Strebe (1) angeordnet sind.

4. Zusammenklappbares Fahrgestell nach Anspruch 1, dadurch gekennzeichnet, daß die sich scherenartig in ihrem mittleren Bereich kreuzende vordere Strebe (1) und hintere Strebe (2) in der Gebrauchsstellung zwei mit ihren Spitzen aufeinanderstehende, geschlossene Dreiecke bilden, wobei die Streben (1; 2) jeweils die Schenkel bilden und die Grundseite einmal durch die zugehörige Tragestrebe (3) und zum anderen durch die entsprechende untere Verbindungsstrebe (10) gebildet ist.

5. Zusammenklappbares Fahrgestell nach Anspruch 1, dadurch gekennzeichnet, daß die Verbindungsstreben (10) einen starren, in Fahrtrichtung geschlossenen U-förmigen Rahmen (22) bilden, bei dem die Verbindungsstreben (10) als nach hinten weisende Schenkel ausgebildet sind, wobei der geschlossene Abschnitt vor den nicht verschiebbaren Drehpunkten (7), an denen die vorderen Streben (1) an den Verbindungsstreben (10) angelenkt sind, liegt, während die hinteren Streben (2) im Bereich der hinteren Enden der die Schenkel bildenden Verbindungsstreben (10) angelenkt sind.

6. Zusammenklappbares Fahrgestell nach Anspruch 5, dadurch gekennzeichnet, daß die unteren Enden der Streben (1; 2) über die im unteren starren Rahmen (22) befindlichen Drehpunkte (7) hinausragen und als Verlängerungen (18) ausgebildet sind, an die die Laufräder (9) angeordnet sind.

7. Zusammenklappbares Fahrgestell nach einem oder mehreren der Ansprüche 1 bis 5, dadurch gekennzeichnet, daß die beiden hinteren Streben (2) an ihren unteren Enden durch eine Querstrebe miteinander verbunden sind, wobei sie mit dieser einen hinteren, geschlossenen U-förmigen Rahmen (23) bilden, der im hinteren Bereich der Verbindungsstreben (10) in den einander gegenüberliegenden, nicht verschiebbaren Drehpunkten (25) angelenkt ist, wobei die Verbindungsstreben (10) nach hinten über die Drehpunkte (25) hinausragende, nach unten gebogene Verlängerungen (26) aufweisen, an denen die hinteren Laufräder (9b) angeordnet sind, während die vorderen Laufräder (9a) an nach unten über den Drehpunkt (7) hinausragenden unteren Verlängerungen (18) der vorderen Streben (1) angeordnet sind.

8. Zusammenklappbares Fahrgestell nach Anspruch 7, dadurch gekennzeichnet, daß die beiden hinteren Streben (2) in dem Bereich, in dem sie den starren U-förmigen Rahmen (23) bilden, nach hinten so abgebogen sind, daß sie annähernd parallel zu den Verbindungsstreben (10) verlaufen.

9. Zusammenklappbares Fahrgestell nach Anspruch 5, 7 und 8, dadurch gekennzeichnet, daß der mit den hinteren Streben (2) gebildete U-förmige Rahmen (23) oberhalb des mit den Verbindungsstreben (10) gebildeten U-förmigen Rahmens (22) angeordnet ist, wobei die beiden Rahmen (22; 23) auf ihren beiden Seiten durch jeweils eine Lasche (24) miteinander verbunden sind und dabei die Laschen (24) fest an den Verbindungsstreben (10) angeordnet sind und die hinteren Streben (2) oberhalb der Verbindungsstreben (10) in den im oberen Bereich der Laschen (24) angeordneten, nicht verschiebbaren Drehpunkten (25) angelenkt sind.

10. Zusammenklappbares Fahrgestell nach Anspruch 9, dadurch gekennzeichnet, daß die U-förmigen Rahmen (22; 23) die gleiche Breite aufweisen.

11. Zusammenklappbares Fahrgestell nach Anspruch 5 und 7, dadurch gekennzeichnet, daß die U-förmigen Rahmen (22; 23) eine unterschiedliche Breite aufweisen, wobei sie nebeneinander in einer Ebene angeordnet sind und dabei durch einen, den nicht verschiebbaren Drehpunkt (25) bildenden Bolzen (27) auf beiden Seiten miteinander verbunden sind.

12. Zusammenklappbares Fahrgestell nach Anspruch 6 und 7, dadurch gekennzeichnet, daß zwischen den über die Drehpunkte (7; 25) hinausragenden Verlängerungen (18; 26) und dem jeweiligen Laufrad (9; 9a; 9b) ein das Laufrad (9; 9a; 9b) tragender Federkörper (17; 17a; 17b) angeordnet ist.

13. Zusammenklappbares Fahrgestell nach Anspruch 12, dadurch gekennzeichnet, daß der Federkörper (17; 19a; 19b) als eine Teleskopfederung ausgebildet ist.

## Claims

1. Collapsible frame for children's or dolls' prams which has two front struts (1) and two rear struts (2) which cross one another in pairs in the manner of scissors and are connected to supporting struts (3), the top ends of the rear struts (2) being connected to the supporting struts (3) via pivot points (8), while a pushing means (11) for pushing the pram is arranged in the top region of the front struts (1) and is articulated on the front struts (1) via a pivot point, while the supporting struts (3) are connected to the pushing means (11) via a pivot point, the pushing means (11) and the front struts (1) being firmly connected to one another in the use position and the pushing means (11) thus running parallel to the front struts (1) and in extension thereof, the front and rear struts (1; 2) being articulated, in the bottom region, on connecting struts (10) and being articulated pivotably to one another in their central region, at their crossover point, characterized in that the front and rear struts (1; 2), in the bottom region, are articulated laterally on the connecting struts (10) at non-displaceable pivot points (7; 25) and, in the central region, a connecting member (4) is arranged in each case at the crossover point of the front strut (1) and the rear strut (2), which connecting member has a bushing (6) which is arranged such that it can be displaced along one of the two struts (1; 2), the bushing (6) being connected to a pivot point (5) in the central region of the other struts (1; 2).

2. Collapsible frame according to Claim 1, characterized in that a link plate (14) is firmly arranged on the bushing (6) of the connecting member (4) and receives a bolt (16) which is arranged rotatably in a bore in the strut (1; 2) which does not bear the bushing (6), the bore forming the pivot point (5).

3. Collapsible frame according to Claim 1 and 2, characterized in that the bushing (6) is arranged on the rear strut (2) and the central pivot point (5) is arranged in the front strut (1).

4. Collapsible frame according to Claim 1, characterized in that, in the use position, the front strut (1) and rear strut (2), which cross in the manner of scissors in their central region, form two closed triangles which stand one upon the other by their vertices, the struts (1; 2) forming the lateral sides in each case and the base side being formed by the associated supporting strut (3), on the one hand, and by the corresponding bottom connecting strut (10), on the other hand.

5. Collapsible frame according to Claim 1, characterized in that the connecting struts (10) form a rigid U-shaped frame (22) which is closed in the direction of travel and in which the connecting struts (10) are formed as rearwardly oriented legs, the closed section being located in front of the non-displaceable pivot point (7), at which the front struts (1) are articulated on the connecting struts (10), while the rear struts (2) are articulated in the region of the rear ends of the leg-forming connecting struts (10).

6. Collapsible frame according to Claim 5, characterized in that the bottom ends of the struts (1; 2) project beyond the pivot points (7) located in the bottom, rigid frame (22) and are formed as extensions (18) on which the wheels (9) are arranged.

7. Collapsible frame according to one or more of Claims 1 to 5, characterized in that the two rear struts (2) are connected to one another at their bottom ends by a transverse strut, forming with the latter a rear, closed U-shaped frame (23) which is articulated in the rear region of the connecting struts (10) at the mutually opposite, non-displaceable pivot points (25), the connecting struts (10) having downwardly bent extensions (26) which project rearwards beyond the pivot points (25) and on which the rear wheels (9b) are arranged, while the front wheels (9a) are arranged on bottom extensions (18) which belong to the front struts (1) and project downwards beyond the pivot point (7).

8. Collapsible frame according to Claim 7, characterized in that, in the region in which they form the rigid U-shaped frame (23), the two rear struts (2) are bent rearwards such that they run approximately parallel to the connecting struts (10).

9. Collapsible frame according to Claims 5, 7 and 8, characterized in that the U-shaped frame (23) formed by the rear struts (2) is arranged above the U-shaped frame (22) formed by the connecting struts (10), the two frames (22; 23) being connected to one another on their two sides by a link plate (24) in each case, and the link plates (24) being firmly arranged on the connecting struts (10), and the rear struts (2) being articulated above the connecting struts (10) at the non-displaceable pivot points (25) arranged in the top region of the link plates (24).

10. Collapsible frame according to Claim 9, characterized in that the U-shaped frames (22; 23) are of the same width.

11. Collapsible frame according to Claims 5 and 7, characterized in that the U-shaped frames (22; 23) are of different widths, in which case they are arranged one beside the other in one plane and are connected to one another on both sides by a bolt (27) which forms the non-displaceable pivot point (25).

12. Collapsible frame according to Claims 6 and 7, characterized in that a spring element (17; 19a; 19b) which bears the wheel (9; 9a; 9b) in each case is arranged between the wheel (9; 9a; 9b) and the extensions (18; 26) extending beyond the pivot points (7; 25).

13. Collapsible frame according to Claim 12, characterized in that the spring element (17; 19a; 19b) is designed as a telescopic suspension means.

## Revendications

1. Châssis repliable pour une voiture d'enfant ou de poupée, qui présente deux montants antérieurs et deux montants postérieurs croisés (1; 2), assemblés par paires l'un à l'autre à la manière de ciseaux, qui sont assemblés à des entretoises de support (3), dans lequel les extrémités supérieures des montants postérieurs (2) sont assemblées aux entretoises de support (3) par l'intermédiaire de points de rotation (8), tandis qu'une coulisse (11) prévue pour faire coulisser la voiture d'enfant ou de poupée est disposée dans la région supérieure des montants antérieurs (1), et est assemblée aux montants antérieurs (1) par l'intermédiaire d'un point de rotation, tandis que les entretoises de support (3) sont assemblées à la coulisse (11) par l'intermédiaire d'un point de rotation, la coulisse (11) et les montants antérieurs (1) étant fixement assemblés l'un à l'autre dans la position d'utilisation et la coulisse (11) étant ainsi parallèle aux montants antérieurs (1) et s'étendant dans le prolongement de ceux-ci, les montants antérieurs et postérieurs (1; 2) étant articulés dans la région inférieure à des entretoises de liaison (10) et étant également assemblés l'un à l'autre de façon pivotante à leur point de croisement dans leur région centrale, caractérisé en ce que les montants antérieurs et postérieurs (1; 2) sont articulés latéralement aux entretoises de liaison (10) dans la région inférieure à des points de rotation (7; 25) non déplaçables et en ce qu'un organe d'assemblage (4) est disposé dans la région centrale à chaque point de croisement du montant antérieur (1) et du montant postérieur (2), lequel présente une buselure (6) qui peut coulisser le long d'un des deux montants (1; 2), la buselure (6) étant assemblée par un point de rotation (5) dans la région centrale de l'autre montant (1; 2).

2. Châssis repliable selon la revendication 1, caractérisé en ce qu'à la buselure (6) de l'organe d'assemblage (4) est disposée une patte fixe (14), qui reçoit un boulon rotatif (16) qui est disposé dans un trou dans le montant (1; 2) qui ne porte pas la buselure (6), le trou formant ainsi le point de rotation (5).

3. Châssis repliable suivant les revendications 1 et 2, caractérisé en ce que la buselure (6) est disposée sur le montant postérieur (2) et le point de rotation central (5) dans le montant antérieur (1).

4. Châssis repliable selon la revendication 1, caractérisé en ce que les montants antérieur (1) et postérieur (2) se croisant à la manière de ciseaux dans leur région centrale forment, en position d'utilisation, deux triangles fermés superposés par leurs pointes, dans lequel les montants (1; 2) forment respectivement les ailes et dans lequel la base est formée d'une part par l'entretoise de support associée (3) et d'autre part par l'entretoise de liaison inférieure correspondante (10).

5. Châssis repliable selon la revendication 1, caractérisé en ce que les entretoises de liaison (10) forment un cadre en forme de U rigide (22), fermé dans la direction de la marche, dans lequel les entretoises de liaison (10) constituent des ailes pointant vers l'arrière, le tronçon fermé étant placé en avant des points de rotation (7) non déplaçables auxquels les montants antérieurs (1) sont articulés aux entretoises de liaison (10), tandis que les montants postérieurs (2) sont articulés dans la région des extrémités arrière des entretoises de liaison (10) formant les ailes.

6. Châssis repliable selon la revendication 5, caractérisé en ce que les extrémités inférieures des montants (1; 2) dépassent les points de rotation (7) se trouvant dans le cadre rigide inférieur (22) et forment des prolongements (18), auxquels sont agencées les roues (9).

7. Châssis repliable suivant une ou plusieurs des revendications 1 à 5, caractérisé en ce que les deux montants postérieurs (2) sont assemblés l'un à l'autre à leurs extrémités inférieures par une traverse, dans lequel ils forment avec celle-ci un cadre en forme de U (23), fermé à l'arrière, qui est articulé dans la région arrière des entretoises de liaison (10) aux points de rotation (25) non déplaçables qui se font face mutuellement, les entretoises de liaison (10) présentant des prolongements (26) incurvés vers le bas s'étendant vers l'arrière au-delà des points de rotation (25), auxquels sont agencées les roues arrière (9b), tandis que les roues avant (9a) sont agencées à des prolongements inférieurs (18) des montants antérieurs (1), qui s'étendent vers le bas au-delà des points de rotation (7).

8. Châssis repliable selon la revendication 7, caractérisé en ce que les deux montants postérieurs (2) sont, dans la région dans laquelle ils forment le cadre rigide en forme de U (23), pliés vers l'arrière de façon telle qu'ils soient à peu près parallèles aux entretoises de liaison (10).

9. Châssis repliable suivant les revendications 5, 7 et 8, caractérisé en ce que le cadre en forme de U (23) formé avec les montants postérieurs (2) est disposé au-dessus du cadre en forme de U (22) formé avec les entretoises de liaison (10), dans lequel les deux cadres (22; 23) sont assemblés l'un à l'autre sur les deux côtés par une patte (24) et les pattes (24) sont ainsi fermement attachées aux entretoises de liaison (10) et les montants postérieurs (2) sont articulés au-dessus des entretoises de liaison (10) aux points de rotation (25) non déplaçables disposés dans la région supérieure des pattes (24).

10. Châssis repliable selon la revendication 9, caractérisé en ce que les cadres en forme de U (22; 23) présentent la même largeur.

11. Châssis repliable suivant les revendications 5 et 7, caractérisé en ce que les cadres en forme de U (22; 23) présentent une largeur différente, les cadres étant disposés l'un à côté de l'autre dans un plan et étant assemblés l'un à l'autre sur les deux côtés par un boulon (27) formant le point de rotation non déplaçable (25).

12. Châssis repliable suivant les revendications 6 et 7, caractérisé en ce qu'un corps à ressort (17; 19a; 19b) portant la roue (9; 9a; 9b) est disposé entre les prolongements (18; 26) s'étendant au-delà des points de rotation (7; 25) et la roue respective (9; 9a; 9b).

13. Châssis repliable selon la revendication 12, caractérisé en ce que le corps à ressort (17; 19a; 19b) constitue une suspension télescopique.
